# EUROPEAN PATENT SPECIFICATION

(11) **EP 0 595 940 B1**
(45) Date of publication and mention of the grant of the patent: **11.10.1995**
(21) Application number: 92915999.4
(22) Date of filing: 18.07.1992
(51) Int. Cl.: G03B 27/58, B65H 16/02, B65H 16/08

(54) **COLLECTIVE AND REUSABLE SUPPORT-ROLLER MAGAZINE FOR PHOTOSENSITIVE MATERIAL**
WIEDERVERWENDBARES SAMMELMAGAZIN MIT TRAGWALZEN FUER LICHTEMPFINDLICHES MATERIAL
MAGASIN A ROULEAUX PORTEURS COLLECTIF ET REUTILISABLE POUR PRODUITS PHOTOSENSIBLES

(30) Priority: 22.07.1991 FR 9109472
(43) Date of publication of application: 11.05.1994
(73) Proprietor: KODAK-PATHE, F-75594 Paris Cedex 12 (FR); EASTMAN KODAK COMPANY, Rochester, New York 14650-2201 (US)
(72) Inventor: BUFF, Michel, François Kodak-Pathé, F-71102 Chalon-sur-Saône Cédex (FR)
(74) Representative: Buff, Michel
(86) International application number: EP9201642
(87) International publication number: WO9302386

(56) References cited:
- DE-A- 2 723 315
- DE-U- 9 000 306
- US-A- 2 554 175
- US-A- 3 565 526
- US-A- 4 070 047
- US-A- 4 735 342

## Description

The invention relates to the conditioning of photographic web materials and more particularly, to a magazine allowing to transport and use very long webs wound around cores.

The applicant already developed such magazines and reference will be made to post-published WO-A-91/12561 and WO-A-91/19222 for a better understanding of such magazines.

The magazine disclosed in these applications allows to wrap photographic paper webs, the length of which is close to 2000 m. According to the application filed on June 8, 1990, the magazine includes lighttight output slots allowing to extract the photographic paper for subsequent use.

The invention is directed to provide another embodiment for such a magazine. Indeed, different types of cutting devices exist, the magazine type which will be disclosed subsequently is more appropriate to some types of cutting devices.

The object of the invention is achieved by means of a collective, reusable magazine for several rolls of photosensitive web material, according to claim 1.

The sole figure schematically illustrates a magazine according to the invention.

The magazine according to the invention resumes the functionalities exposed in French patent application 90 01858 filed on February 12, 1990, now French patent FR-A-2 658 156 published on August 16, 1991, and in French patent application 90 07375 filed on June 8, 1990, now French patent FR-A-2 663 007 published on December 13, 1991,. It can be referred to these two applications for a better understanding of the purposes and advantages of the invention.

The magazine in its simplest version includes a base 10 designed for the handling by means of a lift truck, a rigid, lighttight case 20, designed to protect the photosensitive material and series of support-rollers 30 arranged under each roll.

Advantageously, container 210 and cover 211 define on the front face, parallel to the roll axis, a lip system 220, 221 allowing to extract the photosensitive material. The shape and the materials used for manufacturing these lips are well known in the photographic art. For example, the lips can be coated with velvet preventing the light from entering the magazine while allowing the extraction of the photosensitive material without deterioriating the photosensitive material.

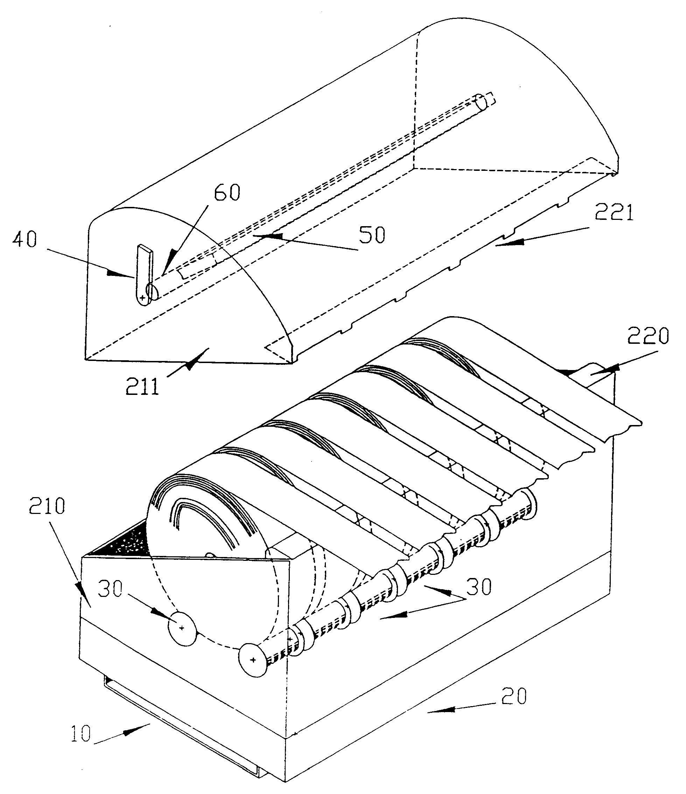

In a preferred embodiment, the outer shape of the lip system can be similar to the one disclosed in WO-A-91/19222 by refering to Figure 2, thus allowing an easy cooperation of the magazine with a cooperating device.

It is obvious, in an improved embodiment, that the magazine is provided with means 40, 50 allowing that the rolls do not come out of the support-rollers associated therewith. Advantageously, these means will be arranged inside the cover and can take the form of a resilient device 40, 50 capable to move between two positions. In the first position or working position, the device is far from the web rolls and releases these ones so that to allow their rotation by means of the traction exerted on the free end coming out of the charger. In the second position or locking position, the device bears on the outer convolution of the rolls not yet used, in order to lock them during the movements of the magazine.

As schematically shown on the figure, the resilient device can be formed of a pad 50 coated with a thick resilient material such as, for example, polyurethane foam. This pad is connected by an arm 60 to a crank 40, at the outside of the charger, thus allowing to place it in either previously described positions.

## Claims

1. A collective and reusable magazine for several rolls of photosensitive web materials, the axes of said rolls being substantially horizontal, said magazine comprising a base (10) appropriate to the handling by means of a lift truck and a rigid, lighttight case (20) enclosing the rolls of photosensitive material, and comprising at least two parts defining a lip system designed to extract the photosensitive material contained in the magazine, characterized in that the magazine comprises two support-rollers (30) for each roll for maintaining each roll in a position where its axis is horizontal.

2. A magazine according to claim 1, wherein the support-rollers are provided with shoulders.

3. A magazine according to claim 2, wherein the upper part of the case is provided with a resilient device movable between a first position wherein the rolls are free to rotate on the support-rollers and a second position wherein the resilient device leans on the outer convolution of the rolls not used in order to prevent rotation thereof.

## Patentansprüche

1. Wiederverwendbares Sammelmagazin für mehrere Rollen lichtempfindlicher bahnförmiger Materialien, wobei die Achsen der Rollen im wesentlichen horizontal angeordnet sind und das Sammelmagazin einen für seine Handhabung mittels eines Hubwagens geeigneten Sockel (10) und ein starres, lichtdichtes, die Rollen lichtempfindlichen Materials umgebendes Gehäuse (20) aufweist sowie mindestens zwei, ein Dichtungssystem bildende Teile umfaßt, durch die das im Sammelmagazin enthaltene lichtempfindliche Material aus dem Magazin herausförderbar ist, **dadurch gekennzeichnet**, daß das Sammelmagazin mit zwei Tragwalzen (30) für jede Rolle versehen ist, um die Rollen in einer Position zu halten, in der ihre Achsen horizontal verlaufen.

2. Sammelmagazin nach Anspruch 1, dadurch gekennzeichnet, daß die Tragwalzen mit Wülsten versehen sind.

3. Sammelmagazin nach Anspruch 2, dadurch gekennzeichnet, daß der obere Teil des Gehäuses mit nachgiebigen Mitteln versehen ist, die zwischen einer ersten Stellung, in der sich die Rollen frei auf den Tragwalzen drehen können, und einer zweiten Stellung bewegbar sind, in der die nachgiebigen Mittel an der äußersten Wicklung der nicht in Gebrauch befindlichen Rollen aufliegen, um eine Drehung der Rollen zu verhindern.

## Revendications

1. Emballage collectif réutilisable pour plusieurs rouleaux de produits photosensible en bande dont les axes respectifs sont pratiquement horizontaux, emballage comprenant un socle (10) adapté à la manutention par chariot élévateur et une enveloppe (20) étanche à la lumière, rigide, entourant les rouleaux de produit photosensible, et comprenant au moins deux parties délimitant un système de lèvres adapté à l'extraction des produits photosensibles contenu dans ledit emballage, caractérisé en ce que l'emballage comprend deux galets-supports (30) pour chaque rouleau afin de maintenir chaque rouleau dans une position où son axe est horizontal.

2. Emballage suivant la revendication 1 dans lequel les galets-supports présentent des épaulements.

3. Emballage conforme à la revendication 2 dans lequel la partie supérieure de l'enveloppe est munie d'un dispositif élastique présentant une première position dans laquelle les rouleaux sont libres en rotation sur les galets-supports et une seconde position dans laquelle le dispositif élastique appuie sur la spire extérieure des rouleaux non utilisés afin d'éviter la rotation de ceux-ci.
